# EUROPÄISCHE PATENTSCHRIFT

(11) **EP 0 850 137 B1**
(45) Veröffentlichungstag und Bekanntmachung des Hinweises auf die Patenterteilung: **01.12.1999**
(21) Anmeldenummer: 96931027.5
(22) Anmeldetag: 05.09.1996
(51) Int. Cl.: B29C 59/16

(54) **KUNSTSTOFFOLIE**
PLASTIC FOIL
FILM PLASTIQUE

(30) Priorität: 12.09.1995 DE 19533680
(43) Veröffentlichungstag der Anmeldung: 01.07.1998
(73) Patentinhaber: DaimlerChrysler AG, 70567 Stuttgart (DE)
(72) Erfinder: WARTUSCH, Johann, 34246 Velmar (DE); MERKEL, Karl-Heinz, 67063 Ludwigshafen (DE)
(74) Vertreter: Fröhling, Werner Otto, Dr.
(86) Internationale Anmeldenummer: EP9603901
(87) Internationale Veröffentlichungsnummer: WO9710097

(56) Entgegenhaltungen:
- EP-A- 0 688 660
- FR-A- 2 454 449
- GB-A- 2 071 673
- US-A- 5 308 704
- NUCLEAR INSTRUMENTS & METHODS IN PHYSICS RESEARCH, SECTION - B: BEAM INTERACTIONS WITH MATERIALS AND ATOMS, Bd. B56 / 57, Nr. PART 02, 1.Mai 1991, Seiten 1232-1235, XP000231863 NABLO S V: "MATERIALS MODIFICATION WITH ACCELERATORS"
- IN SEARCH OF EXCELLENCE, MONTREAL, MAY 5 - 9, 1991, Bd. 2 OF 5, 5.Mai 1991, SOCIETY OF PLASTICS ENGINEERS, Seiten 1111-1113, XP000357172 TOBIN E ET AL: "IMPROVED SURFACE PROPERTIES OF POLYMER SUBSTRATES BY ION IMPLANTATION"
- NUCLEAR INSTRUMENTS & METHODS IN PHYSICS RESEARCH, SECTION - B: BEAM INTERACTIONS WITH MATERIALS AND ATOMS, Bd. B56 / 57, Nr. PART 01, 1.Mai 1991, Seiten 656-659, XP000231618 BRIDWELL L B ET AL: "ION IMPLANTATION OF POLYMERS FOR ELECTRICAL CONDUCTIVITY ENHANCEMENT"
- PATENT ABSTRACTS OF JAPAN vol. 012, no. 110 (C-486), 8.April 1988 & JP,A,62 235337 (TORAY IND INC;OTHERS: 01), 15.Oktober 1987,

## Beschreibung

Die Erfindung betrifft eine Kunststoffolie nach dem Oberbegriff des Anspruchs 1.

Unter Kunststoffen werden hier Polymere verstanden, weiche für bestimmte Einsatzgebiete ausgewählt werden. Diese Einsatzgebiete können sehr vielfältig sein und den Bereich der in der Elektrotechnik verwendeten Werkstoffe bis hin zu Verpackungsmaterialien umspannen. Hier sollen sie jedoch als Isoliermaterial in hochwertigen Motoren, insbesondere Bahnmotoren eingesetzt werden.

Aus der Veröffentlichung von Mucha, A. und Bäther, K.-H.: "Ionenstrahltechniken zur Oberflächenmodifizierung" in: Dünne Schichten 1992, Heft 2, S. 10 - 18, ist es bekannt, daß zur Oberflächenvergütung von Kunststoffen das Verfahren der Ionenimplantation benutzt wird. Bei der Ionenimplantation werden Ionen mit hoher Intensität (10¹⁴ Ionen/cm²s bis 10¹⁵ Ionen/cm²s) und hoher Energie von einigen 100 eV bis mehreren 100 keV auf Festkörperoberflächen geschossen. Die Ionen dringen zunächst durch die an der Oberfläche befindliche Sorptionsschicht, die sich auf jedem Festkörper befindet, in den oberflächennahen Bereich ein. Dabei werden die oberen Monolagen in Folge von Stoßprozessen "verdampft". Technisch wird dieses Verfahren "Sputtern" genannt. Die in die Festkörperoberfläche eingedrungenen Ionen werden durch Wechselwirkung mit den Elektronen und Atomrümpfen abgelenkt und gebremst. Die räumliche Ladungsverteilung der eingeschossenen Ionen hat weitere Wechselwirkungen mit dem Festkörper zur Folge. Die Wechselwirkung mit den Atomen ist vor allem durch Stöße zu verstehen, die zu Kaskaden "verlagerter" Atome im Festkörper führen. Es entsteht ein Ionenstoßkanal mit allerlei Defekten, der von einer Zone erhöhter Dichte von Zwischengitteratomen umgeben st. Die eingeschossenen Ionen werden in einer bestimmten Tiefe nach Abgabe ihrer kinetischen Energie in den Festkörper implantiert. Parallel dazu können auch chemische Reaktionen stattfinden. Nach dem Beschuß findet teilweise eine Annihilation der im Ionenstoßkanal erzeugten Defekte statt, was man als Ausheilung bezeichnet. Zudem kann der Festkörper nach erfolgtem Implantationsprozeß einer defektausheilenden Wärmebehandlung unterzogen werden. Implantierte Gase, besonders Edelgase, können bei diesen Prozessen aus dem Polymer entweichen.

In der Schrift GB-A 2 071 673, die gattungsgemäß zugrundegelegt ist, wird offenbart, Polymeroberflächen mit Implantation von Ionen, insbesondere mit geringer Energie im Bereich einiger Kiloelektronenvolt, zu modifizieren, um die Oberflächenleitfähigkeit jener Polymeroberflächen zu erhöhen. In NUCLEAR INSTRUMENTS AND METHODS IN PHYSICS RESEARCH, SECTION - B : BEAM INTERACTIONS WITH MATERIALS AND ATOMS, BD. B56/57, NR. PART 02, 1. MAI 1991, SEITEN 1232-1235, S.V. NABLO: 'MATERIALS MODIFICATIONS WITH ACCELERATORS' sind verschiedene Anwendungen der Beschleunigertechnologie dargestellt, wie beispielsweise Ionenimplantation in Halbleitermaterialien oder Metalloberflächen. Eine spezielle Beschleunigertechnologieanwendung besteht darin, die Oberflächen von Polymeren mittels Elektronenbestrahlung zu vergüten. Die Elektronenbestrahlung löst einen Vernetzungsprozeß an der Oberfläche des Polymermaterials aus. Die Oberfläche wird dadurch dichter und weniger durchlässig für Sauerstoff. In JP-A 62 235337 ist offenbart, Polymeroberflächen, auf denen Metalle nur schwer haften, durch Ionenimplantation dekorativ zu verändern. Die Oberflächen erhalten einen edelmetallischen Schimmer. In US-A 5,308,704 ist dargelegt, daß die Haftfestigkeit von Zellkulturen auf Zellkulturträgern erhöht werden kann, wenn die Träger zuvor mit Ionenimplantation behandelt werden. In NUCLEAR INSTRUMENTS AND METHODS IN PHYSICS RESEARCH, SECTION - B : BEAM INTERACTIONS WITH MATERIALS AND ATOMS, BD. B56/57, NR. PART 02, 1. MAI 1991, SEITEN 656-659, L.B. BRIDWELL ET AL.: 'ION IMPLANTATION OF POLYMERS FOR ELECTRICAL CONDUCTIVITY ENHANCEMENT' ist, ähnlich wie in GB-A 2 071 673, offenbart, die elektrische Leitfähigkeit von Polymeren zu erhöhen, indem diese an der Oberfläche mit Ionenimplantation modifiziert werden.

Für Polymere bedeutet der Ionenbeschuß, beispielsweise mit Argon, Stickstoff oder Kohlenstoff, daß die Oberflächenstruktur oder deren chemische Zusammensetzung gezielt verändert werden kann. Die langkettigen Polymerstrukturen werden im Bereich der Eindringtiere der Ionen zerstört. Es entstehen kurzkettige Strukturen mit Radikalen. Damit läßt sich beispielsweise die elektrische Leitfähigkeit bestimmter Polyimide um mehrere Größenordnungen anheben.

Bisher hat man versucht, die Wasserdampfdurchlässigkeit von Folien durch Bedampfen mit dünnen Schichten zu verringern. Derartige Folien sind als Verpackungsmaterial im Lebensmittelbereich seit langem bekannt. Nachteil dieser Methode ist jedoch der zusätzliche hohe Materialverbrauch, selbst wenn es sich um dünne Schichten von Aluminiumoxid handelt. Da man für das Aufdampfen ohnehin Energie und Hochvakuum benötigt, kann man die Frage stellen, ob es nicht Verfahren gibt, die preisgünstiger zu ähnlichen Ergebnissen führen.

Der Erfindung liegt die Aufgabe zugrunde, eine Kunststoffolie mit verringerter Wasserdampfdurchlässigkeit anzugeben, deren Herstellung mit möglichst geringem Energie- und Materialaufwand auskommt.

Diese Aufgabe wird mit den im kennzeichnenden Teil des Anspruchs 1 angegebenen Merkmalen gelöst.

Die Erfindung eignet sich vor allem für Folien zur Wicklungsisolierung im Elektromaschinenbau, insbesondere für Traktionsmotoren der thermischen Klassen F und H, insbesondere Bahnmotoren. Die Vorteile von nach der Erfindung hergestellten Folien liegt darin, daß statt teurer Isolierfolienwerkstoffe, wie beispielsweise Polyimid, preiswertere Werkstoffe zum Einsatz kommen, deren Oberfläche vergütet ist. Trotz des relativ aufwendigen Implantationsverfahrens können infolge der hohen Rohstoffpreise für die bisher eingesetzten Produkte große Mengen Isolierfolie preisgünstig hergestellt werden. Sogar die hochwertigen Polyimidfolien, die noch eine gewisse Anfälligkeit gegen Hydrolyse aufweisen, lassen sich auf diese Weise verbessern.

Die erfindungsgemäß hergestellten Kunststoffolien oder -bänder können ganz allgemein zum Verpacken von Gegenständen verwendet werden, welche feuchtigkeitsgeschützt werden sollen. Ebenso könnten mit diesem Verfahren Kunststoffschläuche in ihrer Wasserdampfdurchlässigkeit verbessert werden. Je nach Material könnten denartige Schläuche später auch aufgeschrumpft werden.

Vorteilhafte Ausgestaltungen des Gegenstands des Anspruchs 1 sind in den Unteransprüchen angegeben.

Die Erfindung wird nun anhand eines Ausführungsbeispiels unter Zuhilfenahme den Tabelle erläutert. Die Tabelle zeigt, welche Verbesserungen an den Wasserdampfdurchlässigkeit von Folien verschiedener Kunststoffe durch Ionenimplantation möglich sind.

**Tabelle**

| Wasserdampfdurchlässigkeitsprüfung an Folien. | | | |
|---|---|---|---|
| Polymer | Behandlung | | WDD (g/m²d) |
| | Verfahren | Parameter | |
| PEI | unbehandelt | - | 1,0 |
| | Ionenimplantation, NE, O | 10¹⁶ cm⁻², 60 keV | 0,03...0,07 |
| PES | unbehandelt | - | 4,5 |
| | Ionenimplantation, Ne | 2·10¹⁶ cm⁻², 60 keV | 0,04...0,05 |

Auf den linken Seite den Tabelle sind die beiden untersuchten Polymere Polyetherimid und Polyethersulfon eingetragen und in den Zeilen unter den Überschrift "Behandlung" sind die Fälle den unbehandelten Probe und den mit Ionenimplantation behandelten Proben unterschieden.

Die Parameter für die Ionenimplantation sind in der entsprechenden Spalte aufgelistet. Einmal handelt es sich um einen Beschuß mit Neon- bzw. Sauerstoffionen mit einer Flußdichte von 10¹⁶ cm⁻² und einer Energie von 60 keV, sowie im Falle von PES 2·10¹⁶ cm⁻², 60 keV. In der rechten Spalte sind die Wasserdampfdurchlässigkeitswerte in g/m²d angegeben. Mit d ist die Zeitdauer 24 Stunden = 1 d gemeint. Die Foliendicke ist jeweils 100 µm. Weitere Erhöhungen den Ionendosis bzw. -energie führen in den Reget zur Schädigung den Polymere. Dies muß noch nicht zwingend die Wasserdampfdichtigkeit verschlechtern, hat aber Auswirkungen auf das mechanische Eigenschaftsprofil.

Man erkennt auf den ersten Blick, daß durch die Ionenimplantation eine erhebliche Verbesserung den Wasserdampfresistenz erzielt wird; denn die in den Zeiteinheit durch die Folie durchdiffundierten Mengen sind etwa um den Faktor 15 bis 90 niedriger als von dem Ionenbeschuß. Die Werte wurden an mindestens vier Proben erzielt; eine statistische Auswertung den Meßergebnisse ist aber aufgrund den geringen Versuchszahlen noch nicht möglich. Immerhin ergeben sich eindeutige Belege dafür, daß die Ionenimplantation bei geeigneter Flußdichte und Energie eine erhebliche Verbesserung den behandelten Polymere ermöglicht.

Die so behandelten Oberflächen sind sozusagen wasserdampfabweisend und stellen eine erhebliche Verbesserung von Isolierfolien im Elektromaschinenbau und von Umhüllungen in den Elektrotechnik oder in der Lebensmittelchemie dar.

## Patentansprüche

1. Kunststoffolie, deren Oberfläche im Vakuum durch Beschuß mit Ionen behandelt ist und die Kunststoffolie aus einem Polymer besteht, dessen Monomere entweder reine Kohlenwasserstoffe sind oder zusätzlich Sauerstoff und/oder reinen Stickstoff, Schwefel oder Chlor enthalten,
**dadurch gekennzeichnet,**
daß die Kunststoffolie mit Neonionen einer Energie im Bereich von 40 - 100 keV und einer Flußdichte im Bereich von 10¹⁶ - 10¹⁷ cm⁻² behandelt ist und daß die behandelte Folie eine höhere Feuchtedichtigkeit aufweist als die unbehandelte Folie.

2. Kunststoffolie nach Anspruch 1,
dadurch gekennzeichnet,
daß die Energie der Ionen 30 - 80 keV beträgt.

3. Kunststoffolie nach Anspruch 1 oder 2,
dadurch gekennzeichnet,
daß die Flußdichte der Ionen 1·10¹⁶ cm⁻² bis 50·10¹⁶ cm⁻² beträgt.

4. Kunststoffolie nach Anspruch 1, 2 oder 3,
dadurch gekennzeichnet,
daß die Folie anschließend an den Ionenbeschuß bei 50°C - 100°C mindestens 24 Stunden gelagert ist.

5. Kunststoffolie nach einem oder mehreren der vorangegangenen Ansprüche,
dadurch gekennzeichnet,
daß der Kunststoff aus Polyetherimid besteht.

6. Kunststoffolie nach einem oder mehreren der vorangegangenen Ansprüche 1 bis 4,
dadurch gekennzeichnet,
daß der Kunststoff aus Polyethersulfon besteht.

7. Kunststoffolie nach einem oder mehreren der vorangegangenen Ansprüche 1 bis 4,
dadurch gekennzeichnet,
daß der Kunststoff aus Polyester besteht.

8. Kunststoffolie nach einem oder mehreren der vorangegangenen Ansprüche 1 bis 4,
dadurch gekennzeichnet,
daß der Kunststoff aus Polyethylen besteht.

9. Kunststoffolie nach einem oder mehreren der vorangegangenen Ansprüche 1 bis 4,
dadurch gekennzeichnet,
daß der Kunststoff aus Polyvinylchlorid besteht.

10. Kunststoffolie nach einem oder mehreren der vorangegangenen Ansprüche 1 bis 4,
dadurch gekennzeichnet,
daß der Kunststoff aus Polycarbonat besteht.

11. Kunststoffolie nach einem oder mehreren der vorangegangenen Ansprüche 1 bis 4,
dadurch gekennzeichnet,
daß der Kunststoff eine epoxidharzgetränkte Matte ist.

12. Verwendung einer Kunststoffolie nach einem oder mehreren der vorangegangenen Ansprüche als Wasserdampfsperre.

13. Verwendung einer Kunststoffolie nach einem oder mehreren der vorangegangenen Ansprüche als elektrische Isolierung im Elektromaschinenbau.

## Claims

1. Synthetic material foil, the surface of which is treated in a vacuum by bombardment with ions and the synthetic material foil consists of a polymer, the monomers of which are either pure hydrocarbons or additionally contain oxygen and/or pure nitrogen, sulfur or chlorine, characterised in that the synthetic material foil is treated with neon ions of an energy in the range of 40 to 100 keV and a flux density in the range of 10¹⁶ to 10¹⁷ cm⁻² and that the treated foil has a high moisture proofness than the untreated foil.

2. Synthetic material foil according to claim 1, characterised in that the energy of the ions amounts to 30 to 80 keV.

3. Synthetic material foil according to claim 1 or 2, characterised in that the flux density of the ions amounts to 1·10¹⁶ cm⁻² to 50·10¹⁶ cm⁻².

4. Synthetic material foil according to claim 1, 2 or 3, characterised in that the foil subsequently to the ion bombardment is kept at 50 to 100°C for at least 24 hours.

5. Synthetic material foil according to one or more of the preceding claims, characterised in that the synthetic material consists of polyetherimide.

6. Synthetic material foil according to one or more of the preceding claims 1 to 4, characterised in that the synthetic material consists of polyethersulfone.

7. Synthetic material foil according to one or more of the preceding claims 1 to 4, characterised in that the synthetic material consists of polyester

8. Synthetic material foil according to one or more of the preceding claims 1 to 4, characterised in that the synthetic material consists of polyethylene.

9. Synthetic material foil according to one or more of the preceding claims 1 to 4, characterised in that the synthetic material consists of polyvinylchloride.

10. Synthetic material foil according to one or more of the preceding claims 1 to 4, characterised in that the synthetic material consists of polycarbonate.

11. Synthetic material foil according to one or more of the preceding claims 1 to 4, characterised in that the synthetic material is a mat saturated in epoxy resin.

12. Use of a synthetic material foil according to one or more of the preceding claims as a steam barrier.

13. Use of a synthetic material foil according to one or more of the preceding claims as electrical insulation in electric engine construction.

## Revendications

1. Feuille de matière synthétique, dont la surface est traitée sous vide par une injection d'ions et la feuille de matière synthétique est constituée d'un polymère dont les monomères sont soit des hydrocarbures purs ou contiennent en plus de l'oxygène et/ou de l'azote, du soufre ou du chlore purs.
**caractérisée en ce que**
la feuille de matière synthétique est traitée avec des ions de néon d'une énergie dans la plage de 40-100 keV et d'une densité de flux au voisinage de 10¹⁶-10¹⁷ cm⁻² et que la feuille traitée a une étanchéité plus élevée à l'humidité que Ia feuille non traitée.

2. Feuille de matière synthétique selon la revendication 1,
caractérisée en ce que
l'énergie des ions est de 30-80 keV.

3. Feuille de matière synthétique selon la revendication 1 ou 2,
caractérisée en ce que
la densité de flux des ions est de 1.10¹⁶ cm⁻² jusqu'à 50-10¹⁶ cm⁻².

4. Feuille de matière synthétique selon la revendication 1, 2 ou 3
caractérisée en ce que
la feuille, à la suite de l'injection des ions, est stockée à 50°C - 100°C au moins 24 heures.

5. Feuille de matière synthétique selon l'une ou plusieurs des revendications précédentes,
caractérisée en ce que
la matière synthétique est constituée de polyétherimide.

6. Feuille de matière synthétique selon l'une ou plusieurs des revendications précédentes 1 à 4,
caractérisée en ce que
la matière synthétique est constituée de polyéther sulfone.

7. Feuille de matière synthétique selon l'une ou plusieurs des revendications précédentes 1 à 4.
caractérisée en ce que
la matière synthétique est constituée de polyester.

8. Feuille de matière synthétique selon l'une ou plusieurs des revendications précédentes 1 à 4,
caractérisée en ce que
la matière synthétique est constituée de polyéthylène.

9. Feuille de matière synthétique selon l'une ou plusieurs des revendications précédentes 1 à 4,
caractérisée en ce que
la matière synthétique est constituée de chlorure de polyvinyle.

10. Feuille de matière synthétique selon l'une ou plusieurs des revendications précédentes 1 à 4.
caractérisée en ce que
la matière synthétique est constituée de polycarbonate.

11. Feuille de matière synthétique selon l'une ou plusieurs des revendications précédentes 1 à 4,
caractérisée en ce que
la matière synthétique est un tapis trempé de résine époxy.

12. Utilisation d'une feuille de matière synthétique selon l'une ou plusieurs des revendications précédentes comme feuille de blocage de la vapeur d'eau.

13. Utilisation d'une feuille de matière synthétique selon l'une ou plusieurs des revendications précédentes comme isolation électrique dans l'industrie de l'équipement électrique.
